# EUROPEAN PATENT SPECIFICATION

(11) **EP 2 330 520 B1**
(45) Date of publication and mention of the grant of the patent: **18.07.2018**
(21) Application number: 09817209.1
(22) Date of filing: 02.09.2009
(51) Int. Cl.: G06F 17/30, H04L 29/08

(54) **METHOD FOR DATA MODEL DESCRIPTION IN LARGE-SCALE INFORMATION EXCHANGE AND PROCESSING**
DATENMODELLBESCHREIBUNGSVERFAHREN FÜR GROSSFLÄCHIGEN AUSTAUSCH UND VERARBEITUNG VON INFORMATIONEN
PROCÉDÉ DE DESCRIPTION DE MODÈLE DE DONNÉES POUR L'ÉCHANGE ET LE TRAITEMENT D'INFORMATIONS À GRANDE ÉCHELLE

(30) Priority: 27.09.2008 CN 200810168191
(43) Date of publication of application: 08.06.2011
(73) Proprietor: STATE GRID CORPORATION OF CHINA, Beijing 100031 (CN)
(72) Inventor: XIN, Yaozhong, Beijing 100031 (CN); TAO, Hongzhu, Beijing 100031 (CN); LIN, Feng, Beijing 100031 (CN); NI, Bin, Beijing 100031 (CN); LI, Yisong, Beijing 100031 (CN); SHI, Junjie, Beijing 100031 (CN); PENG, Qingqing, Beijing 100031 (CN); SUN, Wei, Beijing 100031 (CN); CUI, Hengzhi, Beijing 100031 (CN)
(74) Representative: Santarelli
(86) International application number: PCT/CN2009/073683
(87) International publication number: WO 2010/037295

(56) References cited:
- CN-A- 1 556 638
- CN-A- 1 866 253
- US-A1- 2007 083 538
- US-A1- 2007 226 232
- US-B1- 6 938 204
- XIN YAOZHONG ET AL.: 'E Language for Electric Power System Model Description' AUTOMATION OF ELECTRIC POWER SYSTEMS vol. 30, no. 10, 25 May 2006, pages 48 - 51, XP008138576
- WANG MINKUN: 'The Research of Power System Description in Common Information Model And Data Exchange Implementation' CHINESE DOCTORAL DISSERTATION & MASTER'S FULL-TEXT DATABASE (MASTER) ENGINEERING SCIENCE AND TECHNOLOGY II 15 March 2005, XP008155171

## Description

### FIELD OF THE INVENTION

The present invention relates to the field of data processing, and particularly to a data model description method for large-scale information exchange and processing.

### BACKGROUND OF THE INVENTION

In existing methods for large-scale data exchange and/or processing, the data are normally described by CIM/XML, IEEE or PSASP and the corresponding data files are generated. Particularly, when the data description is based on the CIM/XML rules, the overhead of data exchange and processing is very large due to the high repetition rate of description content and the bulky data files. The data description method based on the IEEE data format has a simple style but relatively poor extensibility as it is not object-oriented. Moreover, the data description method based on the PSASP data format has a private format and is not object-oriented, resulting in poor exchangeability. In view of the above-mentioned disadvantages, the data description methods have low efficiency and can not meet the requirements for high-speed data exchange and/or fast processing.

US 6938204 B1 is generally directed to an array-based extensible document storage format, and mainly discloses an array-based extensible document storage format for storing Extensible Markup Language (XML) source documents, or source documents encoded in other notations such as mXML.

US 2007/083538 A1 is related to generating XML instances from flat files, in which Figures 4-7 shows the XML instances generated.

### SUMMARY OF THE INVENTION

The object of the present invention is to provide a data model description method with higher efficiency for large-scale information exchange and processing.

The object-oriented data model description method for large-scale information exchange and processing, comprises the steps of:
forming the extracted data into a data description file based on a data model description template, wherein the data description file comprises a system declaration part for defining basic information of data and a data block part for recording data to be recorded by the data description file, wherein the data block part comprises a data block start flag line for indicating a starting position of a data block recorded in the data description file, a data block header definition part for defining a structure type of the data block and entries of the data described therein, a data record part of the data block for recording the entries of data in the data block, and a data block end flag line for indicating an ending position of the data block recorded in the data description file;
storing the data description file in a first storage unit (A);
obtaining, by a transmitter, a data description file to be exchanged from the first storage unit (A) and sending the data description file to be exchanged to a receiver;
receiving, by the receiver, the data description file to be exchanged and storing the data description file in a second storage unit (B); and
parsing the data description file received from the receiver based on the data model description template;
wherein the model description template may be used to define a format for data content, to realize self-description of the data format.

In an embodiment, the data format includes an attribute list, and name, type, length, dimension and comment of each attribute included for the description of data class.

In an embodiment, the format of the data description file is the horizontal pattern of structure.

In an embodiment, the data description file is used for describing data model and data exchange format of power systems.

In an embodiment, the data description file is transmitted in the form of full data format file and dynamic-data format file.

In an embodiment, the data format includes at least one data line, and each data line is led by a data line leading symbol.

In an embodiment, the comment provides explanation for the content recorded in the data description file.

In an embodiment, the dimension defines the dimension of the attribute values.

An object-oriented data model description apparatus for large-scale information exchange and processing comprises:
means for forming the extracted data into a data description file based on a data model description template, wherein the data description file comprises a system declaration part for defining basic information of data and a data block part for recording data to be recorded by the data description file, wherein the data block part comprises a data block start flag line for indicating a starting position of a data block recorded in the data description file, a data block header definition part for defining a structure type of the data block and entries of the data described therein, a data record part of the data block for recording the entries of data in the data block, and a data block end flag line for indicating an ending position of the data block recorded in the data description file;
means for storing the data description file in a first storage unit (A);
means for obtaining, by a transmitter, a data description file to be exchanged from the first storage unit (A) and sending the data description file to be exchanged to a receiver;
means for receiving, by the receiver, the data description file to be exchanged and storing the data description file in a second storage unit (B); and means for parsing the data description file received from the receiver based on the data model description template;
wherein the model description template may be used to define a format for data content, to realize self-description of the data format.

In an embodiment, the data format includes an attribute list, and name, type, length, dimension and comment of each attribute included for the description of data class.

In an embodiment, the format of the data description file is horizontal pattern of structure.

In an embodiment, the data description file is used for describing data model and data exchange format of power systems.

In an embodiment, the data description file is transmitted in the form of full data format file and dynamic-data format file.

In an embodiment, the data format includes at least one data line, and each data line is led by a data line leading symbol.

In an embodiment, the comment provides explanation for the content recorded in the data description file.

In an embodiment, the dimension defines the dimension of the attribute values.

In summary, the data model description method in the present invention, inherits object-oriented characteristics in CIM/XML-based data description, maintains the simplicity of format in IEEE-based data description and introduces the feature of processing the beginning-of-line characters in PSASP-based data description, thereby forming a special style with combining the electric device object-oriented method and the traditional relation-oriented method. Therefore, it is simple and highly efficient when being used in large-scale operation data exchange and/or processing in online stability computation.

### BRIEF DESCRIPTION OF THE DRAWINGS

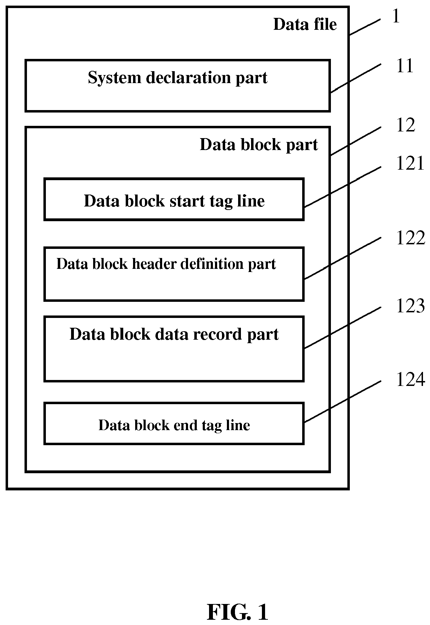

Figure 1 is a structural diagram illustrating a data file in a data model description method according to an embodiment of the present invention.

### DETAILED DESCRIPTION OF THE EMBODIMENTS

According to the data model description method, as shown in Figure 1, the large-scale information exchange and processing includes the following steps:
1) dividing data into data blocks and storing them in a storage unit A as a data file 1;
2) obtaining, by the transmitter, the data file 1 to be exchanged from the storage unit A, and sending the data file 1 to a receiver via a network;
3) storing, by the receiver, the data file 1 in a storage unit B upon reception of the data file 1; and
4) reading and processing, by a processor, the data file 1 from the storage unit B.

The data file 1 describing the data model includes:
a system declaration part 11, for defining basic information of the data file 1; and
a data block part 12, for recording various data that are to be recorded by the data file 1.

The data file 1 also includes a comment part for explanation of the content recorded in the data file.

The system declaration part 11 includes a system declaration start flag "<!", a system declaration content part and a system declaration end flag "!>".The system declaration content part describes the file type (type of the adopted specification or table), the number of classes in the file (the number of tables), the number of objects (the total number of records) and the version of the adopted specification. An embodiment of the format is as follows.

```
       <! E=mySystem class#=3 object#=35 version=1.0 !>.
```

The data block part 12 includes:
a data block start flag line 121, for indicating the starting position of the data block recorded in the data file;
a data block header definition part 122, for defining a structure type of the data block and the entries of data described therein;
a data record part of the data block 123, for recording the entries of data in the data block, including at least one data line led by a data line leading symbol "#"; and
a data block end flag line 124, for indicating the ending position of the data block recorded in the data file.

Specifically, the data block start flag line starts with a start flag marker "<" and ends with ">". The start marker has a class name therein for representing the class of a data object in the data block, i.e. "<ClassName>". The corresponding data block end flag line has an end flag "/" before "ClassName", i.e. "</ClassName>".

In addition, the data block start flag line may also include an entity name for representing an object to which the data in the data block belongs. The class name may be connected with the entity name by a class-entity connector "::", i.e. "<ClassName::EntityName>". For example, the data block start flag "<DispatchingDailyReport::EasternChina>" indicates that the data in the data block are in the class of dispatching daily report and belong to the eastern China power grid, i.e. the data are from a dispatching daily report of the eastern China power grid. Accordingly, the data block end flag line is represented as "/<DispatchingDailyReport::EasternChina>".

In addition, the data block start flag line may also include an entity name for representing an object to which the data in the data block belongs. The class name may be connected with the entity name by a class-entity connector "::", i.e. "<ClassName::EntityName>". For example, the data block start flag "<DispatchingDailyReport::EasternChina>" indicates that the data in the data block are in the class of dispatching daily report and belong to the eastern China power grid, i.e. the data are from a dispatching daily report of the eastern China power grid. Accordingly, the data block end flag line is represented as "/<DispatchingDailyReport::EasternChina>".

Moreover, the class name and the entity name may also be followed by flag attributes and values thereof. The flag attribute and the name are connected with an assignment connector "=", e.g., date= 'YYYY-MM-DD' represents the date of the report. Multiple attribute names are separated by a space " ".

Furthermore, the data block header definition part is used for defining the structure type of the data block and the entries of the data described therein. The structure type of the data block includes: horizontal pattern (Table 1), single column pattern (Table 2) and multi-column pattern (Table 3). The data block header definition methods for data blocks with different structure types are described as follow.
a. The data block header part of a data block with the horizontal pattern of structure includes a horizontal pattern structure flag "@", a "SerialNumber" and at least one attribute name, i.e. "@ SerialNumber AttributeNamel AttributeName2 AttributeName3 ...".
Specifically, the "@" and the "SerialNumber" are separated by a space " ". The serial number may also be represented by an English alias ID. The "@ SerialNumber" and respective attribute names are separated by a space " ". In the data block with the horizontal pattern, each object takes a line and each attribute takes a column, which is suitable for the data with table type or those with less attributes and more objects. Table 1 illustrates an example of a data file with the horizontal pattern in the form of a table.

**Table 1**

| //Comments | | | | Comment part | |
|---|---|---|---|---|---|
| <!System=OMS Version=1.0 Code=UTF-8> | | | | System declaration part | |
| <ClassName::EntityName> | | | | Data block part | Data block start flag |
| @ SerialNumber | AttributeName1 | AttributeName2 | AttributeName3 | | Data block header definition part |
| # 1 | Object1Value1 | Object1Value2 | Object1Value3 | | Data block data record part |
| # 2 | Object2Value1 | Object2Value2 | Object2Value3 | | |
| ...... | | | | | |
| # n ...... | | | | | |
| </ClassName::EntityName> | | | | | Data block end flag |

b. The data block header part of a data block with the single column pattern of structure, includes a single column pattern structure flag "@@", a "SerialNumber", an attribute name and an attribute value, i.e. "@@ SerialNumber AttributeName AttributeValue".
Specifically, the "@@", the "SerialNumber", the "AttributeName" and the "AttributeValue" are separated by spaces " ". In the data block with the single column pattern, each attribute takes a line, and the attribute name and the value take a column respectively, which is suitable for the data with a single object and many attributes. Table 2 illustrates an example of a data file with the single column pattern in the form of a table.

**Table 2**

| //Comments | | | Comment part | |
|---|---|---|---|---|
| <!System=OMS Version=1.0 Code=UTF-8> | | | System declaration part | |
| <ClassName::EntityName> | | | Data block part | Data block start flag |
| @ SerialNumber | AttributeName | AttributeValue | | Data block header definition part |
| # 1 | Attribute1 | Value1 | | Data block data record part |
| # 2 | Attribute1 | Value2 | | |
| ...... | | | | |
| # n ...... | | | | |
| </ClassName::EntityName> | | | | Data block end flag |

c. The data block header part of a data block with the multi-column pattern of structure includes a multi-column pattern structure flag "@#", a "SerialNumber", an attribute name and multiple object names, i.e. "@# SerialNumber AttributeName ObjectName1 ObjectName2 ObjectName3 ...".

Specifically, the "@#" and the "SerialNumber" are separated by a space " ". The serial number may also be represented by an English alias ID. The "@# SerialNumber" are separated with subsequent attribute names and object names by spaces " ". In the data block with the multi-column pattern, each attribute takes a line and each object takes a column, which is suitable for data with a relatively fixed number of objects and many attributes. Table 3 illustrates an example of a data file with the multi-column pattern in the form of a table.

**Table 3**

| //Comments | | | | Comment part | |
|---|---|---|---|---|---|
| <!System=OMS Version=1.0 Code=UTF-8> | | | | System declaration part | |
| <ClassName::EntityName> | | | | Data block part | Data block start flag |
| @ SerialNumber | AttributeName | Object1 | Object2 ...... Objectn | | Data block header definition part |
| # 1 | Attribute1 | Value11 | Value12 ...... Value1n | | Data block data record part |
| # 2 | Attribute1 | Value21 | Value22 ...... Value2n | | |
| ...... | | | | | |
| # n ...... | | | | | |
| </ClassName::EntityName> | | | | | Data block end flag |

Furthermore, the data record part of the data block includes at least one data line, with each data line led by the data line leading symbol "#". The data values in the data line are separated from each other by spaces " ". The representation of the data line corresponds to the data block header definition in a one-to-one manner.

In the first column of the data record part of the data block, the "#" is always followed by one or more spaces, and a serial number is provided following the space, e.g., "# 10", so that serial numbers may form a separate column. The serial number represents the order of this line of data in the data record part of the data block, starting with number 1. A data value sequence begins following a space after the serial number.

Further, for the data with the horizontal pattern, each attribute may be added with an attribute value type definition in the data block header definition part, i.e., an attribute value type definition line may be added, to define a numeric type for the attribute. The attribute value type definition line is led by an attribute value type leading symbol "%", followed by a space and a type sequence for attribute values, which corresponds to the attribute name sequence with the horizontal pattern in a one-to-one manner, indicating data types of the attributes. There are no restrictions on the length of the data type. Specifically, i represents the integer type (int), f represents the float type (float), s represents the string type (string), and p represents the pointer type (pointer).

In addition, for the data with the horizontal pattern, each attribute may be added with a dimension definition in the data block header definition part, i.e., an attribute dimension definition line may be added, to indicate the dimensions of the attributes. The attribute dimension definition line is led by a dimension leading symbol "$", followed by a space and a dimension sequence, which corresponds to the attribute sequence of the horizontal pattern in a one-to-one manner, indicating the dimensions of the attributes, e.g., MW (megawatt), kV (kilovolt), etc. For certain attributes without dimensions, a default sign "-" is used.

Furthermore, for the data with the horizontal pattern, each attribute may be added with a limit definition in the data block header definition part, i.e., an attribute value limit definition line may be added, to define a maximum limit and a minimum limit of the data. The attribute value limit definition line is led by a limit leading symbol ":", followed by a space and a limit sequence, which corresponds to the attribute sequence of the horizontal pattern in a one-to-one manner, indicating the limits of the attributes. The limits are represented by "MinimumAllowedValue" + interval flag"^" + "MaximumAllowedValue", e.g., the limit of "month" is represented as "1^12". If no minimum limit is available, the left side may be left blank, e.g. "^100"; if no maximum limit is available, the right side is left blank, e.g. "10^"; and if neither of maximum limit and minimum limit is available, a default sign "-" is used.

Table 4 illustrates an example of a data file with the horizontal pattern in the form of a table, including defined data types, dimensions and data limits. Specifically, "i" represents that in the data file the data type of the "SerialNumber" is i, i.e. the integer type; "f' represents that in the data file the data type of all "R", "X" and "Cx" is f, i.e. the float type; "Ω" represents that in the data file the dimensions of all the three attribute names "R", "X" and "Cx" are Ω, i.e. the dimensions of the three attributes are ohm; and "1^10" in Table 4 represents that in the data file the minimum allowed value of "SerialNumber" is "1" and the maximum allowed value is "10", considering that the data type of "serial number" is integer type, therefore its value is an integer ranging from 1 to 10 (including 1 and 10); finally, the plurality of "-" in Table 4 represents that there are no dimensions or limits for the data of corresponding attributes.

**Table 4**

| //Description for data type, dimension and limit | | | | | | | |
|---|---|---|---|---|---|---|---|
| <Line> | | | | | | | |
| @ | SerialNumber | I_Node | J_Node | R | X | Cx | Data block start flag |
| % | i | s | s | f | f | f | Data type definition line |
| $ | - | - | - | Ω | Ω | Ω | Dimension definition line |
| : | 1^10 | - | - | - | - | - | Data limit definition line |
| # | 1 | Xin'an | Huan'an | 0.0194 | 0.0592 | 0.0264 | Data block data record part |
| # | 2 | Jiangjiaying | Gaoling | 0.0470 | 0.1980 | 0.0219 | |
| ...... | | | | | | | |
| # | n | ...... | ...... | ...... | ...... | ...... | |
| </Line> | | | | | | | |

Further, the attribute name in the data block header definition part may be a pointer type attribute name for representing that the attribute is a pointer attribute, including a pointer leading symbol "*" and the attribute name. When the pointer leading symbol "*" is presented before the attribute name (including the horizontal pattern, the single column pattern and the multi-column pattern), it shows that the attribute is a pointer attribute (i.e. its value is a pointer that points to an object), and followed immediately by the class name that the pointer points to. When the pointer leading symbol "*" is presented before a data entry, the serial number of the object that the pointer points to follows immediately. If the pointer points to multiple objects, then for continuous serial numbers of objects, an interval flag "^" is used to connect a start and an end object serial numbers, and for discontinuous object identifiers, a comma "," is used to separate object identifiers (with no comma for the last object identifier). As illustrated in Table 5, the value of the *Line attribute of the Yangcheng transformer station is "*45^48,67", which shows that the pointer points to from No. 45 object to No. 48 object and No. 67 object of the line class Line. If there is no pointer pointing to the class in a data line, the corresponding data entry is filled with 0 without a pointer leading symbol "*". As illustrated in Table 5, because the Sanpu transformer station has no generator, the corresponding data entry is 0.

For the horizontal pattern, for a pointer attribute with corresponding values (object instances) in only few data lines, the attribute is called a "sparse pointer attribute". The sparse pointer attribute may not be defined in the data block header, instead, the data may be stored separately in another "pointer line" provided following the data line with the sparse pointer attribute value. The pointer line starts with a pointer leading symbol "*", which is followed by a class name that the pointer points to, a pointer assignment connector "*=" and a serial number of the object pointed to. The pointer line is after the data line of the object that it points to, and is before the next data line. Multiple pointer lines may exist between two object data lines. Pointer lines may effectively reduce the storage waste resulting from the sparse pointer attribute, thereby increasing storage efficiency. Table 5 illustrates a data file with a pointer attribute and a sparse pointer attribute in the form of a table.

**Table 5**

| //Pointer usage example | | | | | | |
|---|---|---|---|---|---|---|
| <Substation> | | | | | | |
| @ | SerialNumber | Name | Voltage | Angle | *Gen | *Line |
| # *4 5:4 8,67 | 1 | Yangcheng | 1.0600 | 0.0000 | *25^31 | *45^48,67 |
| | | | | | | 7 |
| # *4 9:54 | 2 | Sanpu | 1.0200 | 0.0002 | 0 | *49^54 |
| *Serial compensation equipment *:2,4 | | | | | | |
| *Capacitor *:9^11,21 | | | | | | |
| # | 3 | Dongming | 1.0200 | 0.0002 | 0 | 0 |
| | 0 | | | | | |
| ...... | | | | | | |
| # | n ...... | | | | | |
| </Substation> | | | | | | |

Further, attribute inheritance may be used in the data block start flag part and the data block header definition part.

Parent class names with inheritance relationships may be listed in the angle brackets of the start flag of the data block start flag part. The parent class names are separated from each other by a space. Each parent class name is followed by an inheritance relationship flag "=:", which is further followed by a single-letter abbreviation of the parent class name.

The attribute defined with parent class inheritance may be referenced in the data block header definition part, with the attribute name defined with an abbreviation of the parent class name and a decimal point "." before the attribute name. For example, some attributes of the line class Line inherit the attributes I and J of a region class, as illustrated in Table 6. It should be noted that only used attributes are inherited, and not all of the attributes are inherited.

**Table 6**

| // Inheritance mechanism usage example | | | | | | | | |
|---|---|---|---|---|---|---|---|---|
| <Line Area=:A> | | | | | | | | |
| @ | Id | I_Node | J_Node | R | X | Cx | A.I | A.J |
| | | | | A | | | | |
| | | | | .J | | | | |
| # | 1 | Xin'an | Huojia 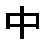 | 0.0194 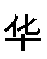 | 0.0592 | 0.0264 | North China | Central China |
| # | 2 | Jiangjia | Gaoling 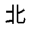 | 0.0470 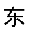 | 0.1980 | 0.0219 | North China | Northeast |
| # | ...... | | | | | | | |
| </Line> | | | | | | | | |

Further, a data block of the data of other class may be recorded in the data record part of the data block of the data file, thereby forming a nested data block. This is a manner similar to XML. To keep the high efficiency, special characters at the beginning of lines keep unchanged, followed by spaces " " and tabulators "TAB", representing a nested format, as illustrated in Table 7. The data recorded in this manner have better logic.

**Table 7**

| // Nested description manner | | | | | | | |
|---|---|---|---|---|---|---|---|
| <Substation> | | | | | | | |
| @ | Name | Voltage | Angle | P | Q | Type | |
| # | Yangcheng | 1.0600 | 0.0000 | 232.38 | -16.8900 | VA | |
| < | Gen> | | | | | | Nested data block |
| @ | Name | V | A | Pg | Qg | | |
| # | G1 | 1.060 | 0.001 | 232.38 | -16.8900 | | |
| </ | Gen > | | | | | | |
| # | Sanpu | 1.0200 | 0.0002 | 231.49 | -15.0025 | PQ | |
| </Substation > | | | | | | | |

Further, as illustrated in Table 8, for the attribute names with duplicate names in Chinese and English and those named inconsistently in multiple systems, the data block header definition part may also include an attribute alias definition line led by an alias leading symbol "/@", which is followed by a space and alias information about attributes, which corresponds to the attribute sequence of the horizontal pattern in a one-to-one pattern, indicating the aliases of the attributes.

**Table 8**

| // Nested description manner | | | | | | |
|---|---|---|---|---|---|---|
| <! System=OMS Code=UTF-8 Data=1.0 !> | | | | | | |
| <PlantStation: :EasternChina> | | | | | | |
| @ | 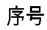 | 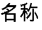 | 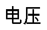 | 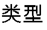 | 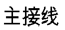 | |

| /@ | ID | name | voltage | type | mainbus | Attribute alias definition |
|---|---|---|---|---|---|---|
| # | 1 | ShidongkouPlant2 | 500 | Thermal power plant | Double busbar with bypass | |
| | | | | | | |
| # | 2 | Qingliubian | 500 | Transformer station | Double busbar with bypass | |
| </PlantStation: :EastChina> | | | | | | |

Further, the data file supports formula calculation similarly to the Excel, and the entire data file text may be loaded into a table, with rows identified with a "row number" (Arabic numbers 1, 2, ...) and attributes and corresponding values identified with a "column name" (Capital English letters A, B, C, ...). Data entries in the data block may be a calculation result from a formula, led by an equal sign "=", and followed by a data entry name and an arithmetic operation symbol (brackets "( )" may also be used if necessary). As illustrated in Table 9, "=H5*E5" recorded in attribute I in row 5 represents that the data entry equals to the product of the value of the attribute H in row 5 and that of the attribute E in row 5, and "=H6+I4" recorded in attribute I and row 6 represents that the data entry equals to the sum of the value of attribute H in row 6 and that of attribute I in row 4. The formula description syntax is substantially the same to the formula description method of the Microsoft Excel.

**Table 9**

| | A | B | C | D | F | F | G | H | I |
|---|---|---|---|---|---|---|---|---|---|
| 1 | < | Line | > | | | | | | |
| 2 | @ | ID | I_node | J_node | R | X | CX | Pi | Qi |
| 3 | # | 1 | Yangcheng | Dongming | 0.02 | 0.03 | 0.002 | 793.67 | 34.30 |
| 4 | # | 2 | Dongming | Sanpu | 0.03 | 0.02 | 0.001 | 820.43 | 16.30 |
| 5 | # | 3 | Suizhong | Jiangjiaying | 0.01 | 0.02 | 0.002 | 384.12 | =**H5*****E5** |
| 6 | # | 4 | Xin'an | Huojia | 0.02 | 0.01 | 0.001 | 407.67 | =**H6**+**I4** |
| 7 | </ | Line | > | | | | | | |

In addition, the data block may also describe unstructured data. A specific format is shown in Table 10, with the <ClassName::EntityName> in the normal data block start flag line modified to be <DataBlock:=Free>. The data block header definition part and the data record part of the data block are replaced by the relevant description of the unstructured data. And </ClassName::EntityName> in the normal data block end flag line is modified to be </DataBlock:=Free>. The unstructured data description method may be used to describe any data, including a figure, an image, a character, a program, etc.

**Table 10**

| |
|---|
| //Unstructured data description manner |
| <DataBlock:=Free SIZE=DataBlockLength> |
| Data block (any data) |
| </DataBlock:=Free> |

Furthermore, the data file according to the embodiment of the present invention not only can describe data content, but also can be used to define a data format, i.e. as a template. A specific format is shown in Table 11. The function of the template is similar to the Schema function of the XML language, mainly for describing an attribute list of a data class as well as the relevant information of attributes such as name, type, length, dimension, comments. In one aspect, the template may be used to define a format for data content, thereby realizing self-description of the data format, and facilitating computer programming implementation. In another aspect, the future extension of the attributes is also facilitated.

**Table 11**

| //Template | | | | | | |
|---|---|---|---|---|---|---|
| <Line:: DataFormatDefinition> | | | | | | |

| @ | SerialNumber | AttributeName | Type | Length | Dimension | Notes |
|---|---|---|---|---|---|---|
| # | 1 | Line name | s | 64 | None | Dispatch name of device |
| # | 2 | Line length | i | - | km | |
| ...... | | | | | | |
| # | n | ...... | | | | |
| </Line::DataFormatDefinition> | | | | | | |

The data file according to the embodiment of the present invention has strong description capability, describing most of data models and data exchange formats of power systems with high efficiency and simple implementation. The method inherits the general framework of CIM, the object-oriented idea, the flexibility of XML, the high efficiency of the relation-oriented technique, and the convenience of Excel, thereby having very strong description capability.

The range of the operation data exchange may be determined based on the requirement of online stability analysis and the principle of level-based maintenance of the operation data. As the operation data involved in across-regional grid stability analysis is mainly about grids above 220kV, the operation data exchange between the national dispatching center and regional grid dispatching centers is suggested as follows: the regional grid dispatching center provides the national dispatching center for 220kV power grid operation data, and power grids with a voltage level of 110kV or lower are processed at the access points based on an equivalent load model (including electricity power used by a power plant); for joint transforms with a maximum voltage level of 220kV or higher, if a reactive compensation device is connected directly to another voltage level side, the reactive compensation device should be included in the exchange; and as the position information of the 500kV main transformer tap and the transformer information including the main transformer with the highest voltage level of 500kV has to be transmitted, the national dispatching center issues the operation information of girds of 220kV or higher to the regional grid dispatching center.

At this stage, the data exchange is implemented by transmitting a data file, and the information storage and transmission are completed by using files in two data formats: full data (including device static data and dynamic data) and dynamic data. The files in the full-data format and in the dynamic-data format not only differ in file extensions (as described below), but also in a file or a class description line of the specification. A file in the full-data format is described as: <! Type=FullData !>; and a file in the dynamic-data format is described as: <! Type=Dynamic !>. A file in the full-data format is generated at the data source side based on a power grid device addition/deletion event, or alternatively, generated according to a determined long period (e.g. several days). For the file in the dynamic-data format, data may be prepared at the data source side every 15 minutes (full second), and received by the data usage side every 15 minutes.

A name of the data file provided by grids may be defined as: Grid_Date_Time.Type. The Type field uses DT to represent a dynamic-data file and QS to represent a full-data file, e.g., EasternChina_20060216_1530.DT, EasternChina_20060216_0000.QS.

In the device attribute table, the name of the plant station field is ended with "Plant" or "Station" based on the electrical primary and may be added with a power grid name as a path name if necessary (e.g. a regional power grid name or a provincial power grid name), with "." for separation. For example, the Central China 220kV Miaozhi station maybe named as: Miaozhi or CentralChina.Miaozhi. Names of devices are based on the name of the grid by the electrical primary naming, and may be added with the name of a subordinate plant station or power grid (as a path name), with "." for separation, e.g., Miaozhi.Transformer1.

The content of the data file is described by using a data record method according to an embodiment of the present invention. Full-data and dynamic-data formats are illustrated below, and the comments of the attributes are added for clarity.

```
 <! Entity=NorthEast type=Dynamic time='20060524_10:07:25' !>
 
  
```

| <Substation::NorthEast type=Dynamic> | | | | | |
|---|---|---|---|---|---|
| @ id | name | volt | nodes | islands | island |
| // | Serial number Plant station name | Voltage level | Node number | Island number | Island belonged to |
| # 1 | DirectSubordinate.ShaheyingStation | 500 | 1 | 1 | NorthEast.Island0 |
| # 2 | DirectSubordinate.ShaheyingStation | 220 | 1 | 1 | NorthEast.Island0 |
| # 3 | DirectSubordinate.ShaheyingStation | 66 | 1 | 1 | NorthEast.Island0 |
| # 4 | DirectSubordinate.GaolingTransformer | 500 | 1 | 1 | NorthEast.Island0 |
| # 5 | DirectSubordinate.XujiaStation | 500 | 2 | 1 | NorthEast.Island0 |
| # 6 | DirectSubordinate.XujiaStation | 220 | 3 | 1 | NorthEast.Island0 |
| </Substation::NorthEast> | | | | | |

| <Bus::NorthEast type=Dynamic> | | | | | | |
|---|---|---|---|---|---|---|
| @ id | name | volt | node | V | Ang | off |
| // Serial number | Bus name | Voltage level | Node | Voltage | Phase angle | Turned off |
| # 1 | ShaheyingStation.500.1Bus | 500 | ShaheyingStation.500.1 | 523.612 | -9.000 | 0 |
| # 2 | ShaheyingStation.500.2Bus | 500 | ShaheyingStation.500.1 | 523.612 | -9.000 | 0 |
| # 3 | ShaheyingStation.220.1Bus | 220 | ShaheyingStation.220.1 | 222.680 | -12.167 | 0 |
| # 4 | ShaheyingStation.220.pBus | 220 | " | 0.000 | 0.000 | 1 |
| # 5 | ShaheyingStation.220.2Bus | 220 | ShaheyingStation.220.1 | 222.680 | -12.167 | 0 |
| # 6 | ShaheyingStation.060.1Bus | 66 | ShaheyingStation.060.1 | 61.341 | -12.542 | 0 |
| # 7 | GaolingTransformer.500.1Bus | 500 | GaolingTransformer.500.1 | 524.562 | -8.803 | 0 |
| # 8 | GaolingTransformer.500.2Bus | 500 | GaolingTransformer.500.1 | 524.562 | -8.803 | 0 |
| </Bus::NorthEast | | | | | | |

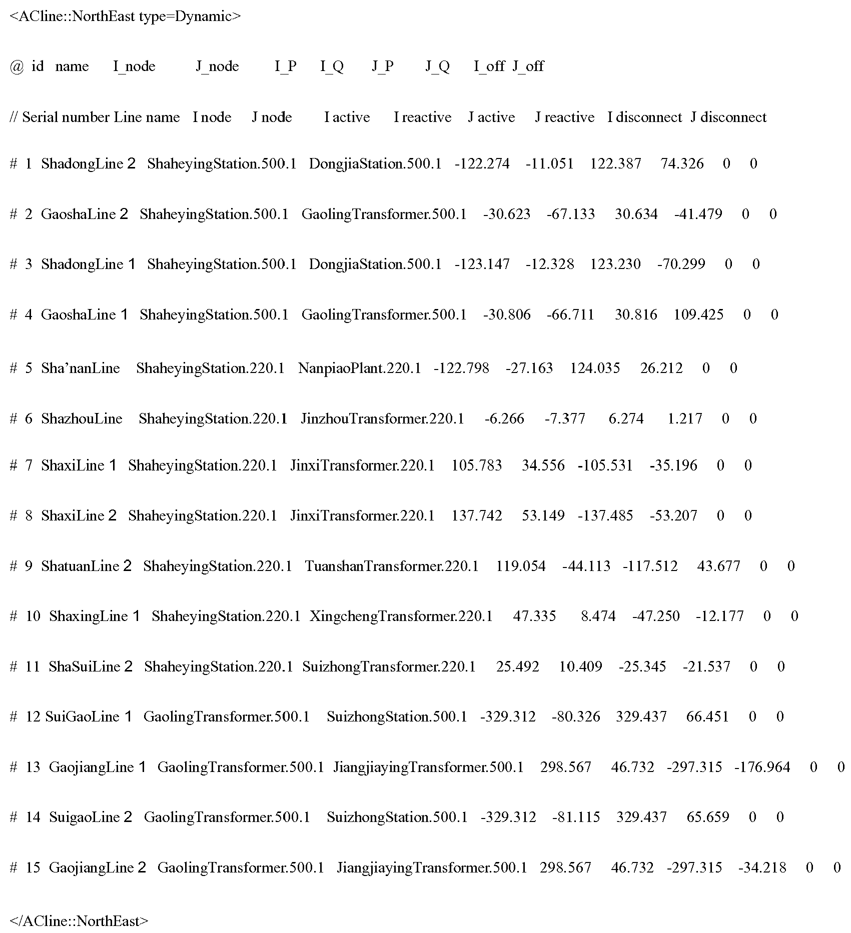

Compared with the data file described using CIM/XML, the data file has significantly-increased description efficiency. For a power system with 100 nodes, the file described using CIM/XML is 2331KB (byte) in length, and the file described using the data file according to the invention is 310KB in length, and the file described using the data file with a subclass from CIM is 171KB in length, therefore the description efficiency is increased by 13.6 times. For the description of the actual large-scale grids, the efficiency may be increased by dozens of times, as illustrated in Table 12.

**Table 12**

| Grid Scale | CIM/XML file Length KB byte | Data file according to an embodiment of present invention Length KB byte | Efficiency increase times |
|---|---|---|---|
| IEC 100 node system | 2331 | 310 | 7.5 |
| Northeast 917 bus system | 9857 | 316 | 31 |
| North China 605 bus system | 8662 | 292 | 29.6 |
| Central China 1124 bus system | 6586 | 289 | 22.7 |
| National dispatching 974 bus system | 15127 | 536 | 28.9 |
| National dispatching integration 2539 bus system | 58684 | 1634 | 35.9 |

## Claims

1. An object-oriented data model description method for large-scale information exchange and processing, the method comprising the steps of:
forming the extracted data into a data description file (1) based on a data model description template, wherein the data description file (1) comprises a system declaration part (11) for defining basic information of data and a data block part (12) for recording data to be recorded by the data description file (1), wherein the data block part (12) comprises a data block start flag line (121) for indicating a starting position of a data block recorded in the data description file (1), a data block header definition part (122) for defining a structure type of the data block and entries of the data described therein, a data record part (123) of the data block for recording the entries of data in the data block, and a data block end flag line (124) for indicating an ending position of the data block recorded in the data description file (1);
storing the data description file (1) in a first storage unit (A);
obtaining, by a transmitter, a data description file (1) to be exchanged from the first storage unit (A) and sending the data description file (1) to be exchanged to a receiver;
receiving, by the receiver, the data description file (1) to be exchanged and storing the data description file (1) in a second storage unit (B); and
parsing the data description file (1) received from the receiver based on the data model description template;
wherein the model description template may be used to define a format for data content, to realize self-description of the data format.

2. The method of claim 1, **characterized in that** the data format includes an attribute list, and name, type, length, dimension and comment of each attribute included for the description of data class.

3. The method of claim 1, **characterized in that** the format of the data description file (1) is the horizontal pattern of structure.

4. The method of claim 1, **characterized in that** the data description file (1) is used for describing data model and data exchange format of power systems.

5. The method of claim 1, **characterized in that** the data description file (1) is transmitted in the form of full data format file and dynamic-data format file.

6. The method of claim 1, **characterized in that** the data format includes at least one data line, and each data line is led by a data line leading symbol.

7. The method of claim 2, **characterized in that** the comment provides explanation for the content recorded in the data description file (1).

8. The method of claim 2, **characterized in that** the dimension defines the dimension of the attribute values.

9. An object-oriented data model description apparatus for large-scale information exchange and processing, the apparatus comprising:
means for forming the extracted data into a data description file (1) based on a data model description template, wherein the data description file (1) comprises a system declaration part (11) for defining basic information of data and a data block part (12) for recording data to be recorded by the data description file (1), wherein the data block part (12) comprises a data block start flag line (121) for indicating a starting position of a data block recorded in the data description file (1), a data block header definition part (122) for defining a structure type of the data block and entries of the data described therein, a data record part (123) of the data block for recording the entries of data in the data block, and a data block end flag line (124) for indicating an ending position of the data block recorded in the data description file (1);
means for storing the data description file (1) in a first storage unit (A);
means for obtaining, by a transmitter, a data description file (1) to be exchanged from the first storage unit (A) and sending the data description file (1) to be exchanged to a receiver;
means for receiving, by the receiver, the data description file (1) to be exchanged and storing the data description file (1) in a second storage unit (B); and
means for parsing the data description file (1) received from the receiver based on the data model description template;
wherein the model description template may be used to define a format for data content, to realize self-description of the data format.

10. The apparatus of claim 9, **characterized in that** the data format includes an attribute list, and name, type, length, dimension and comment of each attribute included for the description of data class.

11. The apparatus of claim 9, **characterized in that** the format of the data description file (1) is horizontal pattern of structure.

12. The apparatus of claim 9, **characterized in that** the data description file (1) is used for describing data model and data exchange format of power systems.

13. The apparatus of claim 9, **characterized in that** the data description file (1) is transmitted in the form of full data format file and dynamic-data format file.

14. The apparatus of claim 9, **characterized in that** the data format includes at least one data line, and each data line is led by a data line leading symbol.

15. The apparatus of claim 10, **characterized in that** the comment provides explanation for the content recorded in the data description file (1).

16. The apparatus of claim 10, **characterized in that** the dimension defines the dimension of the attribute values.

## Patentansprüche

1. Objektorientiertes Datenmodellbeschreibungsverfahren für großflächiges Austauschen und Verarbeiten von Informationen, wobei das Verfahren die Schritte umfasst:
Formen der extrahierten Daten zu einer Datenbeschreibungsdatei (1) auf der Grundlage einer Datenmodellbeschreibungsvorlage, wobei die Datenbeschreibungsdatei (1) einen Systemdeklarationsteil (11) zum Definieren grundlegender Informationen von Daten und einen Datenblockteil (12) zum Aufzeichnen von Daten, die durch die Datenbeschreibungsdatei (1) aufgezeichnet werden sollen, umfasst, wobei der Datenblockteil (12) eine Datenblock-Startmarkierungszeile (121) zum Anzeigen einer Startposition eines Datenblocks, der in der Datenbeschreibungsdatei (1) aufgezeichnet ist, einen Datenblock-Headerdefinitionsteil (122) zum Definieren eines Strukturtyps des Datenblocks und von Einträgen der darin beschriebenen Daten, einen Datenaufzeichnungsteil (123) des Datenblocks zum Aufzeichnen der Einträge von Daten in dem Datenblock und eine Datenblock-Endmarkierungszeile (124) zum Anzeigen einer Endposition des Datenblocks, der in der Datenbeschreibungsdatei (1) aufgezeichnet ist, umfasst;
Speichern der Datenbeschreibungsdatei (1) in einer ersten Speichereinheit (A);
Beschaffen einer Datenbeschreibungsdatei (1), die ausgetauscht werden soll, durch einen Sender aus der ersten Speichereinheit (A) und Senden der Datenbeschreibungsdatei (1), die ausgetauscht werden soll, an einen Empfänger;
Empfangen der Datenbeschreibungsdatei (1), die ausgetauscht werden soll, durch den Empfänger und Speichern der Datenbeschreibungsdatei (1) in einer zweiten Speichereinheit (B); und
Analysieren der Datenbeschreibungsdatei (1), die von dem Empfänger empfangen wurde, auf der Grundlage der Datenmodellbeschreibungsvorlage;
wobei die Modellbeschreibungsvorlage verwendet werden kann, um ein Format für Dateninhalte zu definieren, um eine Selbstbeschreibung des Datenformats zu realisieren.

2. Verfahren nach Anspruch 1,
**dadurch gekennzeichnet, dass**
das Datenformat eine Attributliste enthält und dass ein Name, ein Typ, eine Länge, eine Dimension und ein Kommentar von jedem Attribut für die Beschreibung einer Datenklasse enthalten sind.

3. Verfahren nach Anspruch 1,
**dadurch gekennzeichnet, dass**
das Format der Datenbeschreibungsdatei (1) das horizontale Strukturmuster ist.

4. Verfahren nach Anspruch 1,
**dadurch gekennzeichnet, dass**
die Datenbeschreibungsdatei (1) verwendet wird, um ein Datenmodell und ein Datenaustauschformat von Leistungssystemen zu beschreiben.

5. Verfahren nach Anspruch 1,
**dadurch gekennzeichnet, dass**
die Datenbeschreibungsdatei (1) in der Form einer Datei mit vollständigem Datenformat und einer Datei mit dynamischem Datenformat übertragen wird.

6. Verfahren nach Anspruch 1,
**dadurch gekennzeichnet, dass**
das Datenformat mindestens eine Datenzeile enthält und dass jede Datenzeile von einem Datenzeilenführungssymbol angeführt wird.

7. Verfahren nach Anspruch 2,
**dadurch gekennzeichnet, dass**
der Kommentar eine Erläuterung für den Inhalt bereitstellt, der in der Datenbeschreibungsdatei (1) aufgezeichnet ist.

8. Verfahren nach Anspruch 2,
**dadurch gekennzeichnet, dass**
die Dimension die Dimension der Attributwerte definiert.

9. Objektorientierte Datenmodellbeschreibungsvorrichtung für großflächiges Austauschen und Verarbeiten von Informationen, wobei die Vorrichtung umfasst:
Mittel zum Formen der extrahierten Daten zu einer Datenbeschreibungsdatei (1) auf der Grundlage einer Datenmodellbeschreibungsvorlage, wobei die Datenbeschreibungsdatei (1) einen Systemdeklarationsteil (11) zum Definieren grundlegender Informationen von Daten und einen Datenblockteil (12) zum Aufzeichnen von Daten, die durch die Datenbeschreibungsdatei (1) aufgezeichnet werden sollen, umfasst, wobei der Datenblockteil (12) eine Datenblock-Startmarkierungszeile (121) zum Anzeigen einer Startposition eines Datenblocks, der in der Datenbeschreibungsdatei (1) aufgezeichnet ist, einen Datenblock-Headerdefinitionsteil (122) zum Definieren eines Strukturtyps des Datenblocks und von Einträgen der darin beschriebenen Daten, einen Datenaufzeichnungsteil (123) des Datenblocks zum Aufzeichnen der Einträge von Daten in dem Datenblock und eine Datenblock-Endmarkierungszeile (124) zum Anzeigen einer Endposition des Datenblocks, der in der Datenbeschreibungsdatei (1) aufgezeichnet ist, umfasst;
Mittel zum Speichern der Datenbeschreibungsdatei (1) in einer ersten Speichereinheit (A);
Mittel zum Beschaffen einer Datenbeschreibungsdatei (1), die ausgetauscht werden soll, durch einen Sender aus der ersten Speichereinheit (A) und zum Senden der Datenbeschreibungsdatei (1), die ausgetauscht werden soll, an einen Empfänger;
Mittel zum Empfangen der Datenbeschreibungsdatei (1), die ausgetauscht werden soll, durch den Empfänger, und zum Speichern der Datenbeschreibungsdatei (1) in einer zweiten Speichereinheit (B); und
Mittel zum Analysieren der Datenbeschreibungsdatei (1), die von dem Empfänger empfangen wurde, auf der Grundlage der Datenmodellbeschreibungsvorlage;
wobei die Modellbeschreibungsvorlage verwendet werden kann, um ein Format für Dateninhalte zu definieren, um eine Selbstbeschreibung des Datenformats zu realisieren.

10. Vorrichtung nach Anspruch 9,
**dadurch gekennzeichnet, dass**
das Datenformat eine Attributliste enthält und dass ein Name, ein Typ, eine Länge, eine Dimension und ein Kommentar von jedem Attribut für die Beschreibung einer Datenklasse enthalten sind.

11. Vorrichtung nach Anspruch 9,
**dadurch gekennzeichnet, dass** das Format der Datenbeschreibungsdatei (1) ein horizontales Strukturmuster ist.

12. Vorrichtung nach Anspruch 9,
**dadurch gekennzeichnet, dass**
die Datenbeschreibungsdatei (1) verwendet wird, um ein Datenmodell und ein Datenaustauschformat von Leistungssystemen zu beschreiben.

13. Vorrichtung nach Anspruch 9,
**dadurch gekennzeichnet, dass**
die Datenbeschreibungsdatei (1) in der Form einer Datei mit vollständigem Datenformat und einer Datei mit dynamischem Datenformat übertragen wird.

14. Vorrichtung nach Anspruch 9,
**dadurch gekennzeichnet, dass**
das Datenformat mindestens eine Datenzeile enthält und dass jede Datenzeile von einem Datenzeilenführungssymbol angeführt wird.

15. Vorrichtung nach Anspruch 10,
**dadurch gekennzeichnet, dass**
der Kommentar eine Erläuterung für den Inhalt bereitstellt, der in der Datenbeschreibungsdatei (1) aufgezeichnet ist.

16. Vorrichtung nach Anspruch 10,
**dadurch gekennzeichnet, dass**
die Dimension die Dimension der Attributwerte definiert.

## Revendications

1. Procédé de description de modèle de données orienté objet pour un échange et un traitement d'informations à grande échelle, le procédé comprenant les étapes consistant à :
former les données extraites en un fichier de description de données (1) sur la base d'un gabarit de description de modèle de données, le fichier de description de données (1) comprenant une partie de déclaration de système (11) pour définir des informations de base de données et une partie de bloc de données (12) pour enregistrer des données devant être enregistrées par le fichier de description de données (1), dans lequel la partie de bloc de données (12) comprend une ligne de drapeau de début de bloc de données (121) pour indiquer une position de début d'un bloc de données enregistré dans le fichier de description de données (1), une partie de définition d'entête de bloc de données (122) pour définir un type de structure du bloc de données et des entrées des données décrites à l'intérieur, une partie d'enregistrement de données (123) du bloc de données pour enregistrer les entrées de données dans le bloc de données, et une ligne de drapeau de fin de bloc de données (124) pour indiquer une position de fin du bloc de données enregistré dans le fichier de description de données (1) ;
stocker le fichier de description de données (1) dans une première unité de stockage (A) ;
obtenir, par un émetteur, un fichier de description de données (1) devant être échangé depuis la première unité de stockage (A) et envoyer le fichier de description de données (1) devant être échangé à un récepteur ;
recevoir, par le récepteur, le fichier de description de données (1) devant être échangé et stocker le fichier de description de données (1) dans une seconde unité de stockage (B) ; et
analyser le fichier de description de données (1) reçu en provenance du récepteur sur la base du gabarit de description de modèle de données ;
dans lequel le gabarit de description de modèle peut être utilisé pour définir un format pour un contenu de données, pour réaliser une auto-description du format de données.

2. Procédé selon la revendication 1, **caractérisé en ce que** le format de données inclut une liste d'attributs, et un nom, type, longueur, dimension et commentaire de chaque attribut inclus pour la description de classe de données.

3. Procédé selon la revendication 1, **caractérisé en ce que** le format du fichier de description de données (1) est le motif horizontal de structure.

4. Procédé selon la revendication 1, **caractérisé en ce que** le fichier de description de données (1) est utilisé pour décrire un modèle de données et un format d'échange de données de systèmes d'alimentation.

5. Procédé selon la revendication 1, **caractérisé en ce que** le fichier de description de données (1) est transmis sous la forme d'un fichier de format de données complètes et d'un fichier de format de données dynamiques.

6. Procédé selon la revendication 1, **caractérisé en ce que** le format de données inclut au moins une ligne de données, et chaque ligne de données est conduite par un symbole directeur (leading symbol) de ligne de données.

7. Procédé selon la revendication 2, **caractérisé en ce que** le commentaire fournit une explication pour le contenu enregistré dans le fichier de description de données (1).

8. Procédé selon la revendication 2, **caractérisé en ce que** la dimension définit la dimension des valeurs d'attribut.

9. Appareil de description de modèle de données orienté objet pour un échange et un traitement d'informations à grande échelle, l'appareil comprenant :
des moyens pour former les données extraites en un fichier de description de données (1) sur la base d'un gabarit de description de modèle de données, le fichier de description de données (1) comprenant une partie de déclaration de système (11) pour définir des informations de base de données et une partie de bloc de données (12) pour enregistrer des données devant être enregistrées par le fichier de description de données (1), dans lequel la partie de bloc de données (12) comprend une ligne de drapeau de début de bloc de données (121) pour indiquer une position de début d'un bloc de données enregistré dans le fichier de description de données (1), une partie de définition d'entête de bloc de données (122) pour définir un type de structure du bloc de données et des entrées des données décrites à l'intérieur, une partie d'enregistrement de données (123) du bloc de données pour enregistrer les entrées de données dans le bloc de données, et une ligne de drapeau de fin de bloc de données (124) pour indiquer une position de fin du bloc de données enregistré dans le fichier de description de données (1) ;
des moyens pour stocker le fichier de description de données (1) dans une première unité de stockage (A) ;
des moyens pour obtenir, par un émetteur, un fichier de description de données (1) devant être échangé depuis la première unité de stockage (A) et envoyer le fichier de description de données (1) devant être échangé à un récepteur ;
des moyens pour recevoir, par le récepteur, le fichier de description de données (1) devant être échangé et stocker le fichier de description de données (1) dans une seconde unité de stockage (B) ; et
des moyens pour analyser le fichier de description de données (1) reçu en provenance du récepteur sur la base du gabarit de description de modèle de données ;
dans lequel le gabarit de description de modèle peut être utilisé pour définir un format pour un contenu de données, pour réaliser une auto-description du format de données.

10. Appareil selon la revendication 9, **caractérisé en ce que** le format de données inclut une liste d'attributs, et un nom, type, longueur, dimension et commentaire de chaque attribut inclus pour la description de classe de données.

11. Appareil selon la revendication 9, **caractérisé en ce que** le format du fichier de description de données (1) est un motif horizontal de structure.

12. Appareil selon la revendication 9, **caractérisé en ce que** le fichier de description de données (1) est utilisé pour décrire un modèle de données et un format d'échange de données de systèmes d'alimentation.

13. Appareil selon la revendication 9, **caractérisé en ce que** le fichier de description de données (1) est transmis sous la forme d'un fichier de format de données complètes et d'un fichier de format de données dynamiques.

14. Appareil selon la revendication 9, **caractérisé en ce que** le format de données inclut au moins une ligne de données, et chaque ligne de données est conduite par un symbole directeur (leading symbol) de ligne de données.

15. Appareil selon la revendication 10, **caractérisé en ce que** le commentaire fournit une explication pour le contenu enregistré dans le fichier de description de données (1).

16. Appareil selon la revendication 10, **caractérisé en ce que** la dimension définit la dimension des valeurs d'attribut.
